# EUROPEAN PATENT SPECIFICATION

(11) **EP 2 352 926 B1**
(45) Date of publication and mention of the grant of the patent: **24.10.2018**
(21) Application number: 09829500.9
(22) Date of filing: 13.08.2009
(51) Int. Cl.: F16B 13/06, F16B 13/00, C21D 7/00

(54) **ANCHOR BOLT AND METHOD FOR MAKING SAME**
ANKERBOLZEN UND HERSTELLUNGSVERFAHREN DAFÜR
BOULON D'ANCRAGE ET PROCÉDÉ DE FABRICATION DE CELUI-CI

(30) Priority: 03.11.2008 US 263929
(43) Date of publication of application: 10.08.2011
(73) Proprietor: Black & Decker Inc., New Britain, CT 06053 (US)
(72) Inventor: GAUDRON, Paul, Stratford CT 06615 (US)
(74) Representative: SBD IPAdmin
(86) International application number: PCT/US2009/053742
(87) International publication number: WO 2010/062425

(56) References cited:
- CA-A- 424 285
- GB-A- 2 254 901
- JP-A- 63 072 446
- US-A- 4 100 834
- US-A- 4 996 860
- US-A1- 2003 000 607
- US-A1- 2007 172 328

## Description

### BACKGROUND

An anchor bolt is typically used to attach objects or structures to a base material. The general components of an anchor bolt are a stud, a wedge and a sleeve portion. In use, a hole is drilled or otherwise formed in the base material that has a diameter only slightly larger than that of the wedge and the sleeve of the anchor bolt. This allows passage of the wedge and the sleeve of the anchor bolt into the hole. Upon expansion of the sleeve, however, the material thickness of the sleeve is interposed between the wedge and the base material. This effectively increases the diameter of the wedge by roughly twice the thickness of the sleeve. Since the hole diameter in the base material does not change appreciably due to the expansion input, the anchor bolt becomes substantially permanently anchored in the base material.

Both function and longevity of such anchor bolts in large part rely on the properties of the sleeve portion. More specifically the material must be durable enough to provide suitable anchoring capability and reasonable life. Heretofore, the only material deemed acceptable by the art has been stainless steel material. While this material is quite appropriate for the task its cost factor is difficult to absorb. Sleeve treatment methods, like hardening are applied in the prior art: US2007/0172328A1 and US4100834, the sleeve in the latter is finely tempered to lower hardness. Since economic considerations are important in nearly all industries, the art is always receptive to alternative configurations.

### SUMMARY OF THE INVENTION

According to an aspect of the present invention there is provided a method according to claim 1.

According to one aspect of the present disclosure, an anchor bolt to be installed in a hole includes a stud and a wedge in operable communication with the stud. The anchor bolt further includes a heat treated then cold worked sleeve disposed about the stud and in operable communication with the wedge.

According to yet another aspect of the present disclosure, a method for manufacturing an anchor bolt sleeve includes heat treating a steel blank, and cold working the steel blank into
an anchor bolt sleeve subsequent to the heat treating, the anchor bolt sleeve being expandably receptive to a wedge of an anchor bolt.

### BRIEF DESCRIPTION OF THE FIGURES

The following descriptions should not be considered limiting in any way. With reference to the accompanying drawings, like elements are numbered alike:
Figure 1 depicts a side view of an anchor bolt;
Figure 2 depicts a perspective view of a steel blank disclosed herein; and
Figure 3 depicts a perspective view of a fully formed sleeve disclosed herein.

### DETAILED DESCRIPTION

A detailed description of the hereinafter described embodiments of the disclosed apparatus and method are presented herein by way of exemplification and not limitation with reference to the Figures.

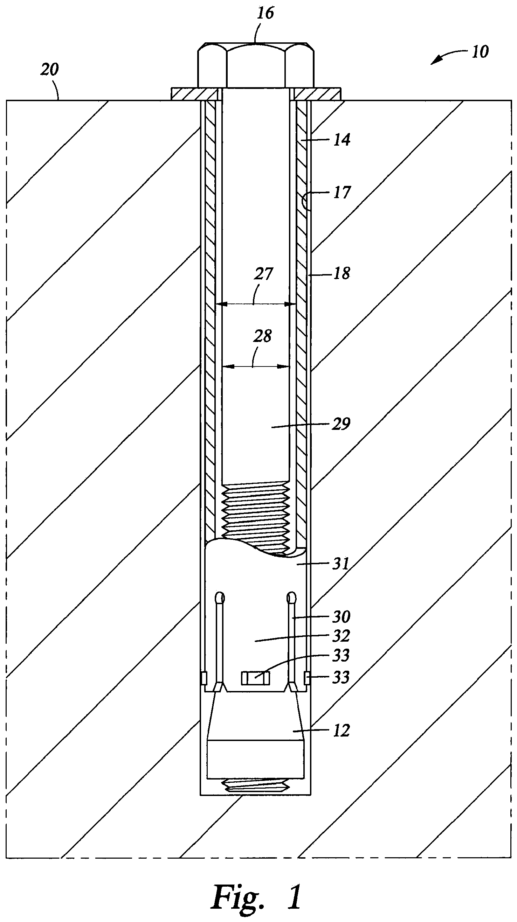

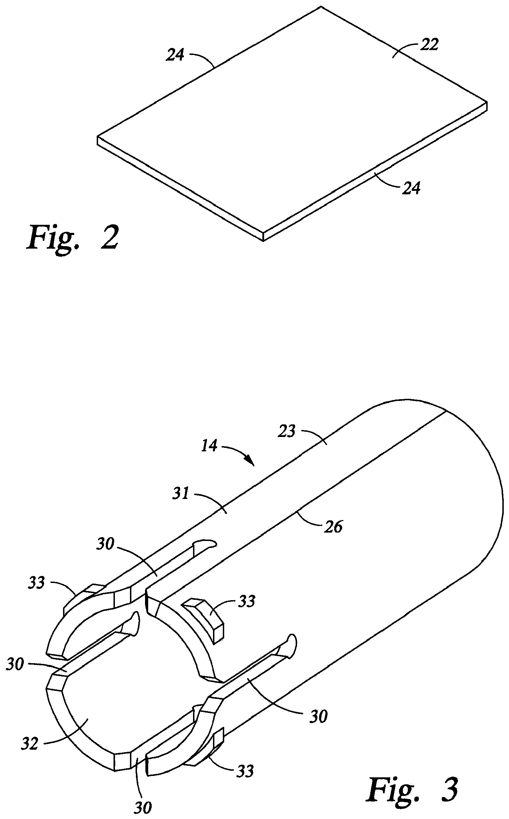

Referring to Figures 1 - 3, an embodiment of an anchor bolt 10 disclosed herein is shown. The anchor bolt 10 includes, a wedge 12, a sleeve 14 and a stud 16. The wedge 12 is threadably engaged with the stud 16 such that rotation of the stud 16 relative to the wedge 12 causes the wedge 12 to move axially along the stud 16. This axial movement of the wedge 12 causes the wedge 12 to also move axially relative to the sleeve 14 thereby causing radial expansion of the sleeve 14. The radial expansion of the sleeve 14 results in a frictional engagement between the sleeve 14 and walls 17 of a hole 18 in a work piece 20 to which the anchor bolt 10 is being attached. It should be understood that the anchor bolt 10 is not limited to this configuration, but may include any configuration having a wedge and a sleeve. Referring to Figure 2, prior to its formation, the sleeve 14 is a steel blank 22 that is first hardened with at least one heat treatment technique. Thereafter, a cold work process is used to further harden the sleeve 14 and finish forming the sleeve 14 into its final configuration. In the embodiments disclosed herein the cold work process includes rolling the steel blank 22 into a hollow cylindrical shape 23 as shown in Figure 3. The hollow cylindrical shape 23 shows two adjacent sides 24 of the steel blank 22 joined along an axial seam 26 in the finished sleeve 14.

The steel blank 22 is made of one or more of a low carbon steel and a high strength, low alloy (HSLA) steel. A low carbon steel has less than about .25 % by weight carbon whereas a HSLA steel has elements such as copper, vanadium, nickel, and molybdenum in combined concentrations as high as about 10% by weight. Thus, the steel blank 22 is composed of a material that is cold workable after being hardened.

Hardening of the steel blank 22 is accomplished with at least one heat treatment process. In one embodiment, the steel blank 22 is quenched and tempered. Quenching and tempering results in at least one of a stronger and harder steel blank 22, or any combination thereof that is favorable in durability, vibration resistance, load capacity, etc. In one embodiment, the heat treatment results in a steel blank 22 having a Rockwell C hardness of less than 35. This allows the steel blank 22 to be more easily formed by a cold working process.

Forming the steel blank 22 into the hollow cylindrical shape 23 of the sleeve 14 includes a cold working process, such as, rolling, drawing, pressing, spinning, extruding, for example, or any other process that produces a desirable sleeve shape. In addition to forming the steel blank 22 into hollow cylindrical shape 23, the cold working process also increases a strength and hardness of the sleeve 14 in the process. The cold working process may result in a steel blank having a hardness greater than 35 on the Rockwell C hardness scale. Furthermore, by cold working to the final hollow cylindrical shape 23 after heat treating, embodiments disclosed herein prevent the seam 26 from opening up during heat treating as would likely occur had the heat treating been performed after the forming to the final hollow cylindrical shape 23.

Sizing of the sleeve 14 into the final hollow cylindrical shape 23 is important to the proper operation of the anchor bolt 10. The sleeve 14 is sized to be expandably receptive to the wedge 12 during setting of the anchor bolt 10. In the embodiment shown, the sleeve 14 has an inner diameter 27 that is greater than an outer diameter 28 of a shank 29 of the stud 16. As such, the shank 29 is free to rotate within the sleeve 14 before and during setting.

Exapandability of the sleeve 14 about the wedge 12 is facilitated by formation of at least one longitudinal opening 30, illustrated herein as a slot, in a wall 31 of the sleeve 14. The slot(s) 30 can be formed in the sleeve 14 at the formation of the blank 22 or during the formation of the final cylindrical shape 23. The slot(s) 30 allow a portion 32 of the sleeve 14 to be radially deflected without the necessity of stretching the material of the sleeve 14 or opening up the seam 26. In other embodiments, the sleeve may be configured for being stretched. Additional features may also be formed in the sleeve 14. For example, gripping projections 33 (figure 3) may be introduced on the sleeve 14 either during or prior to formation of the sleeve 14. The gripping projections 33 can increase friction between the base material and the sleeve 14 during setting of the anchor bolt 10. The gripping projections 33 are shown oriented in a latitudinal direction but may also be a longitudinal projection or may have a non-axial shape.

While the invention has been described with reference to an exemplary embodiment or embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the claims.

## Claims

1. A method for making an anchor bolt sleeve comprising:
hardening a steel blank (22) using a heat treatment technique; and
then further hardening the steel blank by cold working the steel blank into an anchor bolt sleeve (14), the anchor bolt sleeve being expandably receptive to a wedge of an anchor bolt.

2. The method for making an anchor bolt sleeve of claim 1, wherein the heat treatment technique comprises quenching and tempering the steel blank (22).

3. The method for making an anchor bolt sleeve of claim 2, wherein the quenching and tempering results in hardening of the steel blank (22) to a hardness not to exceed 35 on the Rockwell C hardness scale.

4. The method for making an anchor bolt sleeve of claim 1, 2 or 3, wherein the cold working results in hardening of the steel blank to a hardness greater than 35 on the Rockwell C hardness scale.

5. The method for making an anchor bolt sleeve of any one of claims 1 to 4, wherein the cold working is a process selected from the group consisting of rolling, drawing, pressing, spinning, extruding and heading.

6. The method for making an anchor bolt sleeve of any one of claims 1 to 5, wherein the cold working further includes joining the two adjacent sides of the steel blank along a seam (26).

## Patentansprüche

1. Verfahren zur Herstellung einer Ankerbolzenhülse, umfassend:
Härten eines Stahlrohlings (22) unter Verwendung einer Wärmebehandlungstechnik; und
dann weiteres Härten des Stahlrohlings durch Kaltumformen des Stahlrohlings in eine Ankerbolzenhülse (14), wobei die Ankerbolzenhülse für einen Keil eines Ankerbolzens aufweitbar aufnehmend ist.

2. Verfahren zur Herstellung einer Ankerhülse nach Anspruch 1, wobei die Wärmebehandlungstechnik das Abschrecken und Anlassen des Stahlrohlings (22) umfasst.

3. Verfahren zur Herstellung einer Ankerbolzenhülse nach Anspruch 2, wobei das Abschrecken und Anlassen zu einer Härtung des Stahlrohlings (22) auf eine Härte von nicht mehr als 35 auf der Rockwell-C-Härteskala führt.

4. Verfahren zur Herstellung einer Ankerhülse nach Anspruch 1, 2 oder 3, wobei das Kaltumformen zu einer Härtung des Stahlrohlings auf eine Härte größer als 35 auf der Rockwell-C-Härteskala führt.

5. Verfahren zur Herstellung einer Ankerhülse nach einem der Ansprüche 1 bis 4, wobei das Kaltumformen ein Verfahren ist, ausgewählt aus der Gruppe bestehend aus Walzen, Ziehen, Pressen, Spinnen, Extrudieren und Stanzen.

6. Verfahren zur Herstellung einer Ankerhülse nach einem der Ansprüche 1 bis 5, wobei das Kaltumformen weiterhin das Verbinden der beiden benachbarten Seiten des Stahlrohlings entlang einer Naht (26) beinhaltet.

## Revendications

1. Procédé de fabrication d'un manchon de boulon d'ancrage comprenant :
le durcissement d'une ébauche en acier (22) au moyen d'une technique de traitement thermique ; et
le durcissement ensuite de l'ébauche en acier par travail à froid de l'ébauche en acier en un manchon de boulon d'ancrage (14), le manchon de boulon d'ancrage étant réceptif de manière extensible à un coin d'un boulon d'ancrage.

2. Procédé de fabrication d'un manchon de boulon d'ancrage selon la revendication 1, dans lequel la technique de traitement thermique comprend la trempe et le revenu de l'ébauche en acier (22).

3. Procédé de fabrication d'un manchon de boulon d'ancrage selon la revendication 2, dans lequel la trempe et le revenu provoquent le durcissement de l'ébauche en acier (22) à une dureté ne dépassant pas 35 sur l'échelle de dureté de Rockwell C.

4. Procédé de fabrication d'un manchon de boulon d'ancrage selon la revendication 1, 2 ou 3, dans lequel le travail à froid provoque le durcissement de l'ébauche en acier à une dureté supérieure à 35 sur l'échelle de dureté de Rockwell C.

5. Procédé de fabrication d'un manchon de boulon d'ancrage selon l'une quelconque des revendications 1 à 4, dans lequel le travail à froid est un processus choisi dans le groupe constitué de laminage, étirage, pressage, filage, extrusion et bouterollage.

6. Procédé de fabrication d'un manchon de boulon d'ancrage selon l'une quelconque des revendications 1 à 5, dans lequel le travail à froid inclut en outre la jonction des deux côtés adjacents de l'ébauche en acier le long d'une ligne de soudure (26).
